# EUROPÄISCHE PATENTSCHRIFT

(11) **EP 3 140 529 B1**
(45) Veröffentlichungstag und Bekanntmachung des Hinweises auf die Patenterteilung: **09.05.2018**
(21) Anmeldenummer: 15705024.6
(22) Anmeldetag: 19.02.2015
(51) Int. Cl.: F02B 37/18, F16K 31/04, F01P 3/20

(54) **ABGASTURBOLADER MIT EINEM WASTE-GATE-VENTIL**
TURBOCHARGER WITH A WASTE GATE VALVE
TURBOCOMPRESSEUR À SOUPAPE DE DÉCHARGE

(30) Priorität: 09.05.2014 DE 102014106517
(43) Veröffentlichungstag der Anmeldung: 15.03.2017
(73) Patentinhaber: Pierburg GmbH, 41460 Neuss (DE)
(72) Erfinder: NOWAK, Martin, 51379 Leverkusen (DE); BENRA, Michael-Thomas, 44579 Castrop-Rauxel (DE); HEMSING, Axel, 40545 Düsseldorf (DE); KÖSTER, Andreas, 45149 Essen (DE)
(74) Vertreter: Patentanwälte ter Smitten Eberlein-Van Hoof Rütten Partnerschaftsgesellschaft mbB
(86) Internationale Anmeldenummer: PCT/EP2015/053476
(87) Internationale Veröffentlichungsnummer: WO 2015/169459

(56) Entgegenhaltungen:
- WO-A1-2012/089459
- WO-A2-2010/009945
- DE-A1-102008 014 609
- JP-A- 2012 241 619
- US-A1- 2007 199 318

## Beschreibung

Die Erfindung betrifft einen Abgasturbolader mit einem Waste-Gate-Ventil, einem Verdichter und einer Turbine, einem Turbinengehäuse, einem Bypasskanal zur Umgehung der Turbine, einem Bypasskanalabschnitt, der im Turbinengehäuse ausgebildet ist, einem Aktorgehäuse, einem Elektromotor, der im Aktorgehäuse angeordnet ist, einem Getriebe, das im Aktorgehäuse angeordnet ist, einer Abtriebswelle des Getriebes, einem Regelkörper, der mit der Abtriebswelle gekoppelt ist und einen Öffnungsquerschnitt des Bypasskanals beherrscht.

Derartige Abgasturbolader mit Waste-Gate-Ventilen sind bekannt. Der Turbolader dient zur Erhöhung des Ladedrucks und damit zur Leistungssteigerung des Motors. Der zu erzeugende Druck ist dabei aufgrund der Kopplung des Turbinenrades mit dem Verdichterrad immer abhängig von der geförderten Abgasmenge. In bestimmten Betriebszuständen ist es erforderlich, die auf den Verdichter wirkende Antriebsenergie zu verringern beziehungsweise zu regeln.

Hierzu werden unter anderem Waste-Gate-Ventile eingesetzt, welche in einem Bypasskanal angeordnet sind, über den die Turbine umgehbar ist, so dass nicht mehr die vollständige Strömungsmenge des Abgases auf das Turbinenrad wirkt. Diese Waste-Gate-Ventile sind zumeist als Klappenventile ausgebildet, die über einen pneumatischen Aktor betätigt werden, der ein mit der Klappe gekoppeltes Gestänge antreibt.

Da eine hohe thermische Belastung aufgrund des heißen Abgases im Bereich des Turbinengehäuses vorliegt, wurden diese pneumatischen Aktoren zur Verringerung der thermischen Belastung im Bereich des Verdichters, jedoch beabstandet von diesem, angeordnet.

Eine exakte Regelung der über den Bypasskanal abgeführten Abgasmenge ist jedoch mit einem pneumatischen Aktor schwierig. Aus diesem Grund sind in den letzten Jahren zunehmend auch Elektromotoren als Antrieb für Waste-Gate-Ventile verwendet worden. Diese wurden üblicherweise zur Verringerung der thermischen Belastung ebenfalls beabstandet zum Turbinengehäuse angeordnet, so dass weiterhin Gestänge zur Kopplung mit der Klappe verwendet wurden.

Aufgrund des stetig sinkenden zur Verfügung stehenden Bauraums ist es jedoch wünschenswert, die Aktoren der Waste-Gate-Ventile in unmittelbarer Nähe des Ventils selbst anzuordnen, da dies den zu verwendenden Bauraum reduziert und eine genauere Regelung ermöglicht. Auch bestehen bei der Verwendung von Gestängen häufig ein erhöhter Verschleiß der Mechanik und ein erhöhter Aufwand bei der Montage.

So wird in der US2007/0199318 A1 ein Aktor für eine variable Turbinenverstellung vorgeschlagen, welcher einen Luftkühlkanal im Bereich der Elektronikeinheit des Aktors aufweist. Ein derartiger Aktor wird thermisch überlastet, wenn er direkt am heißen Turbinengehäuse befestigt wird.

Aus diesem Grund wird in der WO 2012/089459 A1 ein Abgasturbolader mit einem wassergekühlten Turbinengehäuse und integriertem elektrischen Waste-Gate-Ventil vorgeschlagen. Das Gehäuse, in dem der Elektromotor zum Antrieb des Waste-Gate-Ventils sowie das Getriebe angeordnet sind, ist Teil des Turbinengehäuses, in dem entsprechende Kühlkanäle zur Wasserführung ausgebildet sind. Der Elektromotor und das Getriebe werden somit am Turbinengehäuse montiert, wobei die hierfür erforderliche Öffnung durch einen Deckel verschlossen wird. Die Lagerung des Ventils ist ebenfalls im Turbinengehäuse angeordnet.

Bei der Verwendung der vorgeschlagenen Anorsnung des Waste-Gate-Ventils besteht weiterhin die Gefahr einer thermischen Überlastung des Stellers, da das Kühlmittel beim Durchströmen des Turbinengehäuses stark aufgewärmt wird. Zusätzlich ist der Aktor einer direkten Wärmestrahlung von außen ausgesetzt, so dass bei ungünstigen Bedingungen weiterhin die Gefahr einer Überhitzung besteht.

Es stellt sich daher die Aufgabe, einen Abgasturbolader mit einem Waste-Gate-Ventil zu schaffen, bei dem eine thermische Überlastung des Antriebs des Aktors zuverlässig verhindert wird. Zusätzlich soll das Waste-Gate-Ventil leicht zu montieren sein und einen möglichst geringen Bauraum aufweisen. Des Weiteren ist eine möglichst exakte Regelbarkeit erwünscht.

Diese Aufgabe wird durch einen Abgasturbolader mit einem Waste-Gate-Ventil mit den Merkmalen des Hauptanspruchs 1 gelöst.

Dadurch, dass das Aktorgehäuse separat ausgebildet ist und am Turbinengehäuse befestigt ist, wobei das Aktorghäuse einen separaten Kühlmittelkanal mit einem Kühlmitteleinlasstutzen und einem Kühlmittelauslassstutzen aufweist, der den Elektromotor im Wesentlichen radial umgibt besteht, eine getrennte Kühlmittelversorgung des Aktors, so dass diese abhängig von der im Aktorgehäuse tatsächlich vorhandenen Temperatur und unabhängig von der Temperatur im Turbinengehäuse erfolgen kann. Die Wirkung der Wärmestrahlung wird deutlich verringert, da das Aktorgehäuse direkt gekühlt wird. Es besteht eine thermische Trennung vom Turbinengehäuse trotz des direkten Klappenantriebs, durch den eine sehr genaue Regelung des Waste-Gate-Ventils möglich wird. Durch den Kühlmittelkanal, der den Elektromotor im Wesentlichen radial umgibt, wird die Wärme im Bereich des Elektromotors direkt abgeführt. Des Weiteren wird eine Aufheizung des Elektromotors von außen über das Aktorgehäuse durch Wärmestrahlung weitestgehend ausgeschlossen. Eine thermische Überlastung kann so zuverlässig verhindert werden.

In einer weiterführenden Ausführungsform ist der Kühlmittelkanal in Umfangsrichtung durch eine Trennwand unterbrochen, welche zwischen dem Kühlmitteleinlassstutzen und dem Kühlmittelausiassstutzen angeordnet ist. Auf diese Weise wird eine Kurzschlussströmung vom Kühlmitteleinlass zum Kühlmittelauslass zuverlässig verhindert und eine vollumfängliche Kühlung sichergestellt.

Vorzugsweise ist der Kühlmittelkanal in Umfangsrichtung durch zwei Trennwände unterbrochen, welche axial verlaufen und in Umfangsrichtung betrachtet beidseits des Kühlmitteleinlassstutzens angeordnet sind, so dass eine im Wesentlichen axiale Durchströmungsrichtung von Einlassstutzen aus festgelegt wird, die zu einer guten Verteilung des Kühlmittels führt.

Vorteilhafterweise sind am Aktorgehäuse Anschraubdome ausgebildet, über die das Aktorgehäuse am Turbinengehäuse mittels Schrauben befestigt ist. Über diese Anschraubdome kann der Abstand zum heißen Turbinengehäuse erhöht werden, so dass der Wärmeübergang zum Elektromotor verringert wird.

In einer weiterführenden vorteilhaften Ausbildung ist das Aktorgehäuse zweistückig ausgebildet, wodurch eine zusätzliche thermische Trennung zwischen dem Elektromotor und dem Turbinengehäuse erreicht wird und eine thermische Entkopplung des den Elektromotor aufnehmenden Gehäuseteils vom Turbinengehäuse ermöglicht wird.

In einer hierzu weiterführenden Ausbildung der Erfindung weist das Aktorgehäuse ein Antriebsgehäuse und ein Lagergehäuse auf, die miteinander verbunden sind, wobei im Antriebsgehäuse der Elektromotor angeordnet ist und im Lagergehäuse die Abtriebswelle gelagert ist. Somit gelangt die über die Abtriebswelle geleitete Wärme nicht direkt zum Elektromotor, sondern kann bereits im Lagergehäuse abgeführt werden.

Zusätzlich sind das Getriebe und eine Elektronikeinheit in einem Raum angeordnet, der durch das Antriebsgehäuse und das Lagergehäuse begrenzt ist. Dieser Raum befindet sich somit zwischen den beiden Gehäuseteilen und somit auch zwischen dem Turbinengehäuse und dem wärmeempfindlichen Elektromotor. Die Montage des Getriebes und der Elektronikeinheit ist aufgrund der guten Zugänglichkeit besonders einfach.

Besonders bevorzugt ist es, wenn der Kühlmittelelnlassstutzen, der Kühlmittelauslassstutzen und der erste Kühlmittelkanal sowie ein Kühlmitteleinlasskanal und ein Kühlmittelauslasskanal am Antriebsgehäuse ausgebildet sind und an Lagergehäuse ein Kühlmitteleinlasskanal ein zweiter Kühlmittelkanal und ein Kühlmittelauslasskanal ausgebildet sind, wobei der Kühlmittelauslasskanal des Antriebsgehäuses in den Kühlmitteleinlasskanal des Lagergehäuses mündet und der Kühlmittelauslasskanal des Lagergehäuses in den Kühlmitteleinlasskanal des Antriebsgehäuses mündet. Daraus folgt, dass das Kühlmittel vom Kühlmitteleinlassstutzen zunächst abschnittsweise den Elektromotor umströmt und anschließend das Lagergehäuse durchströmt. Daraufhin gelangt das Kühlmittel zurück zum Antriebsgehäuse und kühlt dort einen zweiten Abschnitt des Elektromotors bevor es am Kühlmittelauslassstutzen wieder ausströmt. So kann ein großer Teil der Wärme des Abgases bereits im Bereich des Lagergehäuses abgeführt werden, bevor es in das Antriebsgehäuse gelangen kann.

Vorzugsweise umgibt der zweite Kühlmittelkanal ein Lager zur Lagerung der Abtriebswelle radial vollständig, So werden beide Gehäuseteile durch die umfänglichen Umströmungen gegen Wärmestrahlung geschützt. Des Weiteren besteht eine hohe Kühlwirkung durch die große Wärme aufnehmende Fläche zwischen den Gehäuseteilen und den Kühlmittelkanälen.

Um diese vollständige Umströmung des Antriebshehäuses und zusätzlich auch eine Einströmung des Kühlmittels in das Lagergehäuse sicher zu stellen, erstrecken sich die Trennwände, die den ersten Kühlmittelkanal in Umfangsrichtung unterbrechen über die gesamte Höhe des ersten Kühlmittelkanals, wobei die Trennwände in Verlängerung der den Kühlmittelauslasskanal des Antriebsgehäuses in Umfangsrichtung begrenzenden Wände ausgebildet sind.

Vorzugsweise weist die Elektronikeinheit einen Stecker und einen Lagesensor auf, so dass eine präzise Lagerückmeldung entsprechend der Stellung der Abtriebswelle möglich wird. Elektrische Bauteile und Leitungen können vollständig in der Elektronikeinheit verlegt werden, so dass zusätzliche elektrische Montagen nicht notwendig sind.

Vorteilhaft ist es, wenn der Regelkörper an der Abtriebswelle befestigt ist. Diese Befestigung kann entweder direkt an der Welle erfolgen oder über einen auf den Regelkörper greifenden Hebel, der sich von der Welle aus erstreckt. Eine solche Ausführung verringert de Montageaufwand und ermöglicht eine sehr genaue Regelbarkelt.

Alternativ kann der Regelkörper mit einer Klappnwelle gekoppelt sein, die eine gemeinsame Drehachse mit der Abtriebswelle aufweist. So bleibt die gute Regelbarkeit erhalten, jedoch kann eine thermische Trennung oder Isolierung zur Verringerung der über die Welle in den Aktor transportierten Wärme eingesetzt werden.

Dies kann beispielsweise dadurch erfolgen, dass die Klappenwelle mit der Abtriebswelle über eine Oldham-Kupplung gekoppelt ist, die eine direkte Drehkopplung bei gleichzeitigem Toleranzausgleich sicherstellt und durch die verringerten Anlageflächen den Wärmetransport mindert. Zusätzlich kann diese Kupplung aus einem schlecht Wärme leitenden Material wie Keramik hergestellt werden.

Es wird somit ein Abgasturbolader mit einem Waste-Gate-Ventil geschaffen, welches zuverlässig vor thermischer Überlastung geschützt ist, vormontiert am Turbolader angebracht werden kann, so dass die Montage erleichtert wird, wobei eine sehr genaue Regelung des Waste-Gate-Ventils möglich ist. Die Kühlung kann dabei getrennt an die Bedürfnisse der Turbine und des Ventils angepasst werden. Der benötigte Bauraum ist im Vergleich zu bekannten Ausführungen deutlich verringert.

Ein Ausführungsbeispiel eines erfindungsgemäßen Abgasturboladers mit einem Waste-Gate-Ventil ist in den Figuren dargestellt und wird nachfolgend beschrieben.
Figur 1 zeigt eine Seitenansicht eines erfindungsgemäßen Abgasturboladers mit Waste-Gate-Ventil in perspektivischer Darstellung.

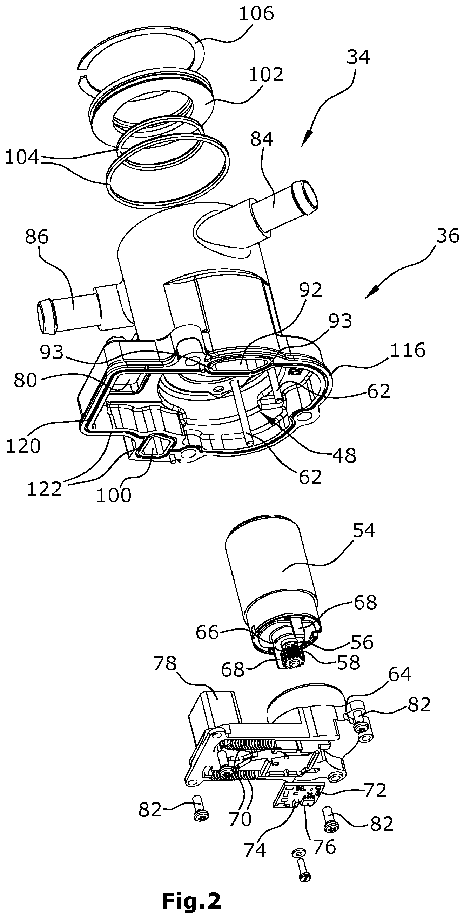

Figur 2 zeigt eine perspektivische Seitenansicht eines Antriebsgehäuses des Waste-Gate-Ventils aus Figur 1 in gesprengter Darstellung.
Figur 3 zeigt eine perspektivische Seitenansicht eines Lagergehäuses des Waste-Gate-Ventils aus Figur 1 in gesprengter Darstellung.
Figur 4 zeigt eine Kopfansicht des Antriebsgehäuses des Waste-Gate-Ventils aus Figur 2 in perspektivischer Darstellung.

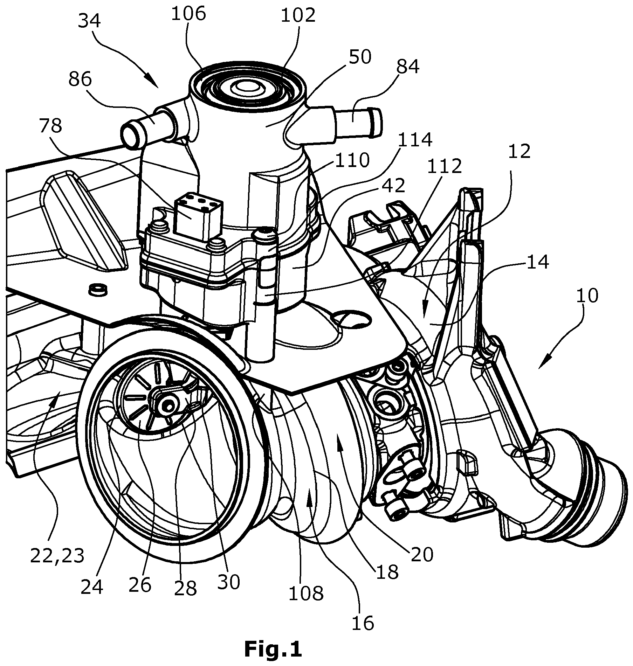

Der in Figur 1 dargestellte Abgasturbolader 10 besteht aus einem Verdichter 12 mit einem Verdichterrad, das in einem Verdichtergehäuse 14 angeordnet ist und einer Turbine 16 mit einem Turbinenrad, das in einem Turbinengehäuse 18 angeordnet ist. Das Turbinenrad ist in bekannter Weise auf einer gemeinsamen Welle mit dem Verdichterrad befestigt, so dass die Bewegung des Turbinenrades durch eine Abgasströmung im Turbinengehäuse 18 über die Welle auf das Verdichterrad übertragen wird, wodurch im Verdichtergehäuse 14 ein Luftstrom komprimiert wird.

Im Turbinengehäuse 18 zweigt stromaufwärts des das Turbinenrad umgebenden Spiralkanals 20 ein Bypasskanal 22 ab. Dieser Bypasskanal 22 mündet hinter dem Spiralkanal 20 in den folgenden Abgaskanal des Verbrennungsmotors.

In einem Bypasskanalabschnitt 23, der im Turbinengehäuse 18 ausgebildet ist, befindet sich ein Ventilsitz 24, der einen Öffnungsquerschnitt des Bypasskanals 22 umgibt. Der Öffnungsquerschnitt ist mittels eines Regelkörpers 26 in Form einer Klappe regelbar, welche zum Verschluss des Öffnungsquerschnitts auf den Ventilsitz 24 aufgelegt werden kann und zur Öffnung des Durchströmungsquerschnitts des Bypasskanals 22 von diesem abgehoben werden kann.

Hierzu ist der Regelkörper 26 an einem Hebel 28 befestigt, der sich von einer Klappenwelle 30 aus erstreckt und einstückig mit dieser hergestellt ist. Die Klappenwelle 30 weist eine gleiche Drehachse auf, wie eine Abtriebswelle 32 eines Aktors 34, über den der Regelkörper 26 betätigt wird. Hierzu ragt die Abtriebswelle 32 aus einem Aktorgehäuse 36 in Richtung des Turbinengehäuses 18 und wird mittels einer Oldham-Kupplung 38 mit der Klappenwelle 30 drehfest verbunden, wobei auch andere Kupplungen zwischen der Abtriebswelle 32 und der Kappenwelle 30 denkbar sind.

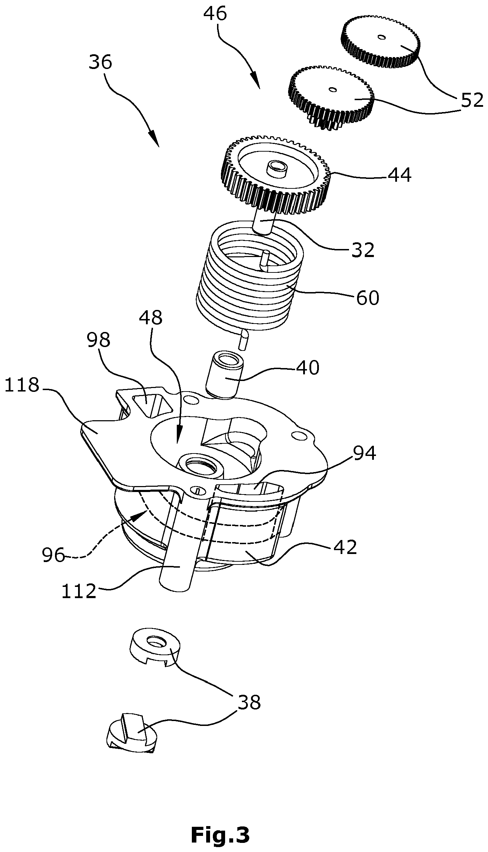

Die Abtriebswelle 32 ist, wie insbesondere in Figur 3 zu erkennen ist, über ein Lager 40 in einem Lagergehäuse 42 gelagert, welches ein erstes Gehäuseteil des Aktorgehäuses 36 bildet. Auf der Abtriebswelle 32 ist ein Abtriebszahnrad 44 eines als Stirnradgetriebe ausgebildeten Getriebes 46 angeordnet, welches in einem Raum 48 angeordnet ist, der einerseits durch das Lagergehäuse 42 und andererseits durch ein als Antriebsgehäuse 50 dienendes zweites Gehäuseteil des Aktorgehäuses 36 begrenzt wird.

Weitere Zahnräder 52 des Getriebes 46 werden über einen Elektromotor 54 angetrieben, auf dessen Antriebswelle 56 ein Antriebsritzel 58 angeordnet ist, welches mit der nächsten Getriebestufe des Getriebes 46 kämmt.

Im Lagergehäuse 42 Ist zusätzlich noch eine Rückstellfeder 60 angeordnet, mittels derer die Abtriebswelle 32 und damit der Regelkörper 26 bei Ausfall des Elektromotors 54 oder sonstiger Fehlfunktionen in eine fail-safe Stellung gedreht wird, um Schäden am Abgasturbolader 10 zu verhindern.

Im Raum 48 ist neben den Zahnrädern 44, 52, 58 des Getriebes 46, von denen zwei Zahnräder 52 auf Achsen 62 angeordnet sind, die vom Antriebsgehäuse 50 in den Raum 48 ragen, auch eine Elektronikeinheit 64 angeordnet. Diese umfasst nicht sichtbare Anchlusskontakte, die mit Motorkontaktfahnen 68 zur Versorgung des Elektromotors 54 mit Spannung verbunden werden. Zusätzlich dient diese Elektronikeinheit 64 zur Befestigung des Elektromotors 54 im Bereich des A-Lagers 66 und ist mit Drosseln 70 und Kondensatoren zur Entstörung des Elektromotors 54 ausgestattet. Des Weiteren trägt die Elektronikeinheit 64 eine Platine 72, auf der neben Steuerelementen 74 ein berührungsloser Lagesensor 76 zur Lagerückmeldung des Abtriebszahnrades 44 und damit des Regelkörpers 26 angeordnet ist, so dass eine genaue Regelung des Waste-Gate-Ventils 14 ermöglicht wird. Die Elektronikeinheit 64 trägt auch die gesamten elektrischen Leitungen, welche zu einem Stecker 78 führen, der an der Elektronikeinheit 64 ausgebildet ist und im zusammengebauten Zustand durch eine Öffnung 80 des Antriebsgehäuses 50 nach außen ragt. Die Elektronikeinheit 64 wird mittels Schrauben 82 am Antriebsgehäuse 50 befestigt und weist eine in den Figuren nicht erkennbare Öffnung auf, durch die das Antriebsritzel 58 zum übrigen Getriebe 46 ragt, so dass die Elektronikeinheit 64 zwischen dem Getriebe 46 und dem Elektromotor 54 angeordnet ist.

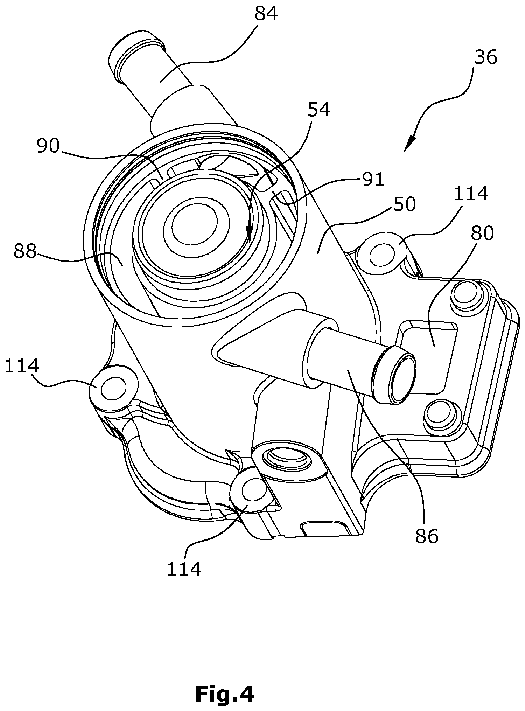

Erfindungsgemäß sind am Antriebsgehäuse 50 ein Kühlmitteleinlassstutzen 84 und ein Kühlmittelauslassstutzen 86 ausgebildet. Diese sind mit einem Kühlmittelkanal 88 verbunden, der sich im Antriebsgehäuse 50 im Wesentlichen über die gesamte Höhe des Elektromotors 54 und diesen beinahe vollumfänglich umgebend erstreckt, wie insbesondere in Figur 4 zu erkennen ist. In Umfangsrichtung wird dieser Kühlmittelkanal 88 lediglich durch zwei schmale, axial verlaufende Trennwände 90, 91 unterbrochen, die dazu dienen eine Kurzschlussströmung vom Kühlmitteleinlasstutzen 84 zum Kühlmittelauslassstutzen 86 zu verhindern und das Kühlmittel axial in Richtung des Lagergehäuses 42 zu leiten.

Dieser durch die Trennwände 90, 91 abgegrenzte Abschnitt des Kühlmittelkanals 88 mündet in einen axial in Richtung des Lagergehäuses 42 verlaufenden Kühlmittelauslasskanal 92, der im zusammengebauten Zustand in einen axial verlaufenden Kühlmitteleinlasskanal 94 übergeht, der im Lagergehäuse 42 ausgebildet. Die Trennwände 90, 91 befinden sich etwa in Verlängerung der den Kühlmittelauslasskanal 92 in Umfangsrichtung begrenzenden Wände 93. Des Weiteren ist im Lagergehäuse 42 ein zweiter Kühlmittelkanal 96 ausgebildet, der das Lagergehäuse 42 vollumfänglich umgibt und über den Kühlmitteleinlasskanal 94 mit Kühlmittel versorgt wird, welches in beide Umfangsrichtungen zu einem Kühlmittelauslassknal 98 strömt, der an der zum Kühlmitteleinlasskanal 94 gegenüberliegenden Seite des Lagergehäuses 42 ausgebildet ist und sich in axialer Richtung erstreckt. Dieser mündet wiederum in einen axial verlaufenden Kühlmittelauslasskanal 100 des Antriebsgehäuse 50, welcher wiederum in den ersten Kühlmittelkanal 88 mündet und zwar in den anderen durch die Trennwände 90, 91 begrenzten Bereich des Kühlmittelkanals 88.

Entsprechend wird der Aktor 34, sowohl im Antrebgehäuse 50 als auch im Lagergehäuse 42 vollständig umströmt. Das in Figur 4 ersichtliche offene axiale Ende des Kühlmittelkanals 88 wird mittels eines Deckels 102 verschlossen, welcher unter Zwischenlage von zwei Dichtringen 104 mittels eines Klemmrings 106 am offenen Ende den Kühlmittelkanal 88 abdichtend in seiner Lage fixiert wird.

Am Turbinengehäuse 18 sind Gewindebohrungen 108 ausgebildet, in die Schrauben 110 gedreht werden, welche durch sich über die axiale Höhe des Lagergehäuses 42 ersteckende Anschraubdome 112 und durch korrespondierend angeordnete Anschraubdome 114 des Antriebsgehäuses 50 gesteckt werden. Beim Anziehen dieser Schrauben 110 wird einerseits das Lagergehäuse 42 am Turbinengehäuse 18 befestigt und andererseits das Antriebsgehäuse 50 am Lagergehäuse 42. Hierzu sind am Lagergehäuse 42 und am Antriebsgehäuse 50 zueinander gewandte korrespondierende Flanschflächen 116, 118 ausgebildet, wobei in der Flanschfläche 116 des Antriebsgehäuses 50 Nuten 120 zur Aufnahme einer Dichtung 122 ausgebildet sind, die einerseits den Innenraum 48 des Aktors 34 nach außen abdichtet und andererseits die Kühlmitteleinlass- und Kühlmittelauslasskanäle 92, 94, 98, 100 des Antriebsgehäuses 50 und des Lagergehäuses 42 dichtend miteinander verbindet.

Das beschriebene Waste-Gate-Ventil verfügt entsprechend über einen eigenen Kühlmittelkreislauf, der es ermöglich, die Temperatur im Gehäuse des Waste-Gate-Ventils separat, also unabhängig vom Turbinengehäuse des Abgasturboladers zu regeln. Der Aktor des Waste-Gate-Ventils kann vormontiert werden und anschließend am Turbinengehäuse befestigt werden, so dass eine direkte Anbindung des Aktors an das Ventil erreicht wird, wodurch eine sehr genaue Regelung möglich wird. Aufgrund der guten thermischen Entkopplung des Aktors vom Turbinengehäuse und daraus folgend der geringen thermischen Belastung des Elektromotors sowie der anderen elektronischen Bausteine wird eine hohe Lebensdauer erreicht.

Es sollte deutlich sein, dass die vorliegende Erfindung nicht auf das Ausführungsbeispiel beschränkt ist, sondern verschiedene Modifikationen innerhalb des Schutzbereichs des Hauptanspruchs möglich sind.

## Patentansprüche

1. Abgasturbolader (10) mit einem Waste-Gate-Ventil (14),
einem Verdichter (12) und einer Turbine (16),
einem Turbinengehäuse (18),
einem Bypasskanal (22) zur Umgehung der Turbine (16),
einem Bypasskanalabschnitt (23), der im Turbinengehäuse (18) ausgebildet ist,
einem Aktorgehäuse (36),
einem Elektromotor (54), der im Aktorgehäuse (36) angeordnet ist,
einem Getriebe (46), das im Aktorgehäuse (36) angeordnet ist,
einer Abtriebswelle (32) des Getriebes (46),
einem Regelkörper (26), der mit der Abtriebswelle (32) gekoppelt ist und einen Öffnungsquerschnitt des Bypasskanals (22) beherrscht,
**dadurch gekennzeichnet, dass**
das Aktorgehäuse (36) separat ausgebildet ist und am Turbinengehäuse (18) befestigt ist, wobei das Aktorgehäuse (36) einen separaten Kühlmittelkanal (88, 92, 94, 96, 98, 100) mit einem Kühlmitteleinlassstutzen (84) und einem Kühlmittelauslassstutzen (86) aufweist, der den Elektromotor (54) im wesentlichen radial umgibt.

2. Abgasturbolader mit einem Waste-Gate-Ventil nach Anspruch 1,
**dadurch gekennzeichnet, dass**
der Kühlmittelkanal (88) in Umfangsrichtung durch zumindest eine Trennwand (90; 91) unterbrochen ist, welche zwischen dem Kühlmitteleinlassstutzen (84) und dem Kühlmittelauslassstutzen (86) angeordnet ist.

3. Abgasturbolader mit einem Waste-Gate-Ventil nach einem der vorhergehenden Ansprüche,
**dadurch gekennzeichnet, dass**
der Kühlmittelkanal (88) in Umfangsrichtung durch zwei Trennwände (90, 91) unterbrochen ist, welche axial verlaufen und in Umfangsrichtung betrachtet beidseits des Kühlmitteleinlassstutzens (84) angeordnet sind.

4. Abgasturbolader mit einem Waste-Gate-Ventil nach einem der vorhergehenden Ansprüche,
**dadurch gekennzeichnet, dass**
am Aktorgehäuse (36) Anschraubdome (112, 114) ausgebildet sind, über die das Aktorgehäuse (36) am Turbinengehäuse (18) mittels Schrauben (110) befestigt ist.

5. Abgasturbolader mit einem Waste-Gate-Ventil nach einem der vorhergehenden Ansprüche,
**dadurch gekennzeichnet, dass**
das Aktorgehäuse (36) zweistückig ausgebildet ist.

6. Abgasturbolader mit einem Waste-Gate-Ventil nach Anspruch 5,
**dadurch gekennzeichnet, dass**
das Aktorgehäuse (36) ein Antriebsgehäuse (50) und ein Lagergehäuse (42) aufweist, die miteinander verbunden sind, wobei im Antriebsgehäuse (50) der Elektromotor (54) angeordnet ist und im Lagergehäuse (42) die Abtriebswelle (32) gelagert ist.

7. Abgasturbolader mit einem Waste-Gate-Ventil nach Anspruch 6,
**dadurch gekennzeichnet, dass**
das Getriebe (46) und eine Elektronikeinheit (64) in einem Raum (48) angeordnet sind, der durch das Antriebsgehäuse (50) und das Lagergehäuse (42) begrenzt ist.

8. Abgasturbolader mit einem Waste-Gate-Ventil nach einem der Ansprüche 5 bis 7,
**dadurch gekennzeichnet, dass**
der Kühlmitteleinlassstutzen (84), der Kühlmittelauslassstutzen (86) und der erste Kühlmittelkanal (88) sowie ein Kühlmitteleinlasskanal (100) und ein Kühlmittelauslasskanal (92) am Antriebsgehäuse (50) ausgebildet sind und am Lagergehäuse (42) ein Kühlmitteleinlasskanal (94), ein zweiter Kühltnittelkanal (96) und ein Kühlmittelauslasskanal (98) ausgebildet sind, wobei der Kühlmittelauslasskanal (92) des Antriebsgehäuses (50) in den Kühlmitteleinlasskanal (94) des Lagergehäuses (42) mündet und der Kühlmittelauslasskanal (98) des Lagergehäuses (42) in den Kühlmitteleinlasskanal (100) des Antriebsgehäuses (50) mündet.

9. Abgasturbolader mit einem waste-Gate-Ventil nach Anspruch 8,
**dadurch gekennzeichnet, dass**
der zweite Kühlmittelkanal (96) ein Lager (40) zur Lagerung der Abtriebswelle (32) radial vollständig umgibt.

10. Abgasturbolader mit einem Waste-Gate-Ventil nach einem der Ansprüche 8 oder 9,
**dadurch gekennzeichnet, dass**
sich die Trennwände (90, 91), die den ersten Kühlmittelkanal (88) in Umfangsrichtung unterbrechen über die gesamte Höhe des ersten Kühlmittelkanals (88) erstrecken, wobei die Trennwände (90, 91) in Verlängerung der den Kühlmittelauslasskanal (92) des Antriebsgehäuses (50) in Umfangsrichtung begrenzenden Wände (93) ausgebildet sind.

11. Abgasturbolader mit einem Waste-Gate-Ventil nach einem der Ansprüche 7 bis 10,
**dadurch gekennzeichnet, dass**
die Elektronikeinheit (64) einen Stecker (78) und einen Lagesensor (76) aufweist.

12. Abgasturbolader mit einem Waste-Gate-Ventil nach einem der vorhergehenden Ansprüche,
**dadurch gekennzeichnet, dass**
der Regelkörper (26) an der Abtriebswelle (32) befestigt ist.

13. Abgasturbolader mit einem Waste-Gate-Ventil nach einem der Ansprüche 1 bis 11,
**dadurch gekennzeichnet, dass**
der Regelkörper (26) mit einer Klappenwelle (30) gekoppelt ist, die eine gemeinsame Drehachse mit der Abtriebswelle (32) aufweist.

14. Abgasturbolader mit einem Waste-Gate-Ventil nach Anspruch 13,
**dadurch gekennzeichnet, dass**
die Klappenwelle (30) mit der Abtriebswelle (32) über eine Oldham-Kupplung (38) gekoppelt ist.

## Claims

1. Turbocharger (10) with a waste gate valve (14),
a compressor (12) and a turbine (16),
a turbine housing (18),
a bypass channel (22) for bypassing the turbine (16),
a bypass channel portion (23) which is formed in the turbine housing (18), an actuator housing (36),
an electric motor (54) which is arranged in the actuator housing (36),
a transmission (46) which is arranged in the actuator housing (36),
an output shaft (32) of the transmission (46),
a control body (26) which is coupled to the output shaft (32) and controls an opening cross-section of the bypass channel (22),
**characterized in that**
the actuator housing (36) is formed separately and is secured to the turbine housing (18), said actuator housing (36) having a separate coolant channel (88, 92, 94, 96, 98, 100) with a coolant inlet port (84) and a coolant outlet port (86) which surrounds the electric motor (54) substantially radially.

2. Turbocharger with a waste gate valve of claim 1, **characterized in that** the coolant channel (88) is interrupted in the circumferential direction by at least one partition wall (90; 91) arranged between the coolant inlet port (84) and the coolant outlet port (86).

3. Turbocharger with a waste gate valve of one of the preceding claims, **characterized in that** the coolant channel (88) is interrupted in the circumferential direction by two partition walls (90, 91) that extend radially and, seen in the circumferential direction, are arranged on either side of the coolant outlet port (84).

4. Turbocharger with a waste gate valve of one of the preceding claims, **characterized in that** screw domes (112, 114) are provided at the actuator housing (36) via which the actuator housing (36) is fastened to the turbine housing (18) by means of screws (110).

5. Turbocharger with a waste gate valve of one of the preceding claims, **characterized in that** the actuator (36) is of a two-part design.

6. Turbocharger with a waste gate valve of claim 5, **characterized in that** the actuator housing (36) has a drive housing (50) and a bearing housing (42) connected with each other, with the electric motor (54) being arranged in the drive housing (50) and the output shaft (32) being supported in the bearing housing (42).

7. Turbocharger with a waste gate valve of claim 6, **characterized in that** the transmission (46) and an electronics unit (64) are arranged in a space (48) delimited by the drive housing (50) and the bearing housing (42).

8. Turbocharger with a waste gate valve of one of claims 5 to 7, **characterized in that** the coolant inlet port (84), the coolant outlet port (86) and the first coolant channel (88), as well as a coolant inlet channel (100) and a coolant outlet channel (92) are formed at the drive housing (50), and a coolant inlet channel (94), a second coolant channel (96) and a coolant outlet port (98) are formed at the bearing housing (42), wherein the coolant outlet channel (92) of the drive housing (50) opens into the coolant inlet channel (94) of the bearing housing (42) and the coolant outlet channel (98) of the bearing housing (42) opens into the coolant inlet channel (100) of the drive housing (50).

9. Turbocharger with a waste gate valve of claim 8, **characterized in that** a bearing (40) for supporting the output shaft (32) is fully surrounded by the second coolant channel (96) in the radial direction.

10. Turbocharger with a waste gate valve of one of claims 8 or 9, **characterized in that** the partition walls (90, 91) that interrupt the first coolant channel (88) in the circumferential direction extend over the entire height of the first coolant channel (88), wherein the partition walls (90, 91) are formed as an extension of the walls (93) delimiting the coolant channel (92) of the drive housing (50) in the circumferential direction.

11. Turbocharger with a waste gate valve of one of claims 7 to 10, **characterized in that** the electronics unit (64) has a connector (78) und a position sensor (76).

12. Turbocharger with a waste gate valve of one of the preceding claims, **characterized in that** the control body (26) is mounted on the output shaft (32).

13. Turbocharger with a waste gate valve of one of claims 1 to 11, **characterized in that** the control body (26) is coupled with a flap shaft (30) having a common axis of rotation with the output shaft (32).

14. Turbocharger with a waste gate valve of claim 14, **characterized in that** the flap shaft (30) is coupled with the output shaft (32) via an Oldham coupling (38).

## Revendications

1. Turbocompresseur (10) à soupape de décharge (14), avec
un compresseur (12) et une turbine (16),
un carter de turbine (18),
un canal de dérivation (22) pour contourner la turbine (16),
une section du canal de dérivation (23) formée dans le carter de turbine (18),
un carter d'actionneur (36),
un moteur électrique (54) disposé dans le carter d'actionneur (36),
un engrenage (48) disposé dans le carter d'actionneur (36),
un arbre de sortie (32) de l'engrenage (48),
un corps de réglage (26) couplé à l'arbre de sortie (32) et commandant une section transversale d'ouverture du canal de dérivation (22),
**caractérisé en ce que**
le carter d'actionneur (36) est formé séparément et est monté sur le carter de turbine (18), ledit carter d'actionneur (36) comprenant un canal de réfrigérant (88, 92, 94, 96, 98, 100) séparé avec un embout d'entrée de réfrigérant (84) et un embout de sortie de réfrigérant (86) qui entoure ledit moteur électrique (54) essentiellement radialement.

2. Turbocompresseur à soupape de décharge selon la revendication 1, **caractérisé en ce que** le canal de réfrigérant (88) est interrompu dans la direction circonférentielle par au moins une paroi de séparation (90; 91) disposée entre l'embout d'entrée de réfrigérant (84) et l'embout de sortie de réfrigérant (86).

3. Turbocompresseur à soupape de décharge selon l'une quelconque des revendications précédentes, **caractérisé en ce que** le canal de réfrigérant (88) est interrompu dans la direction circonférentielle par deux parois de séparation (90; 91), qui s'étendent axialement et sont disposées, vu dans la direction circonférentielle, de part et d'autre de l'embout d'entrée de réfrigérant (84).

4. Turbocompresseur à soupape de décharge selon l'une quelconque des revendications précédentes, **caractérisé en ce que** des dômes de fixation (112, 114) sont formés sur le carter d'actionneur (36) par lesquels le carter d'actionneur (36) est fixé sur le carter de turbine (18) utilisant des vis (110).

5. Turbocompresseur à soupape de décharge selon l'une quelconque des revendications précédentes, **caractérisé en ce que** le carter d'actionneur (36) est conçu en deux pièces.

6. Turbocompresseur à soupape de décharge selon la revendication 5, **caractérisé en ce que** le carter d'actionneur (36) comprend un carter d'entrainement (50) et un carter de palier (42) qui sont reliés entre eux, ledit moteur électrique (54) étant disposé dans le carter d'entrainement (50) et l'arbre de sortie (32) est disposé dans le carter de palier (42).

7. Turbocompresseur à soupape de décharge selon la revendication 6, **caractérisé en ce que** l'engrenage (46) et une unité électronique (64) sont disposés dans un espace (48) délimité par le carter d'entrainement (50) et le carter de palier (42).

8. Turbocompresseur à soupape de décharge selon l'une quelconque des revendications 5 à 7, **caractérisé en ce que** l'embout d'entrée de réfrigérant (84), l'embout de sortie de réfrigérant (86) et le premier canal de réfrigérant (88), ainsi qu'un canal d'entrée de réfrigérant (100) et un canal de sortie de réfrigérant (92) sont formés au carter d'entrainement (50) et un canal d'entrée de réfrigérant (94), un deuxième canal de réfrigérant (96) et un canal de sortie de réfrigérant (98) sont formés au carter de palier (42), ledit canal de sortie de réfrigérant (92) du carter d'entrainement (50) s'ouvrant dans le canal d'entrée de réfrigérant (94) du carter de palier (42) et ledit canal de sortie de réfrigérant (94) du carter de palier (42) s'ouvrant dans le canal d'entrée de réfrigérant (100) du carter d'entrainement (50).

9. Turbocompresseur à soupape de décharge selon la revendication 8, **caractérisé en ce qu'**un palier (40) pour le support de l'arbre d'entrainement (32) est complètement entouré radialement par le deuxième canal de réfrigérant (96).

10. Turbocompresseur à soupape de décharge selon l'une quelconque des revendications 8 ou 9, **caractérisé en ce que** les parois de séparation (90, 91), qui interrompent le premier canal de réfrigérant (88) dans la direction circonférentielle, s'étendent sur toute la hauteur die premier canal de réfrigérant (88), les parois de séparation (90, 91) sont formées en prolongation des parois (93) délimitant le canal de sortie de réfrigérant (92) du carter d'entrainement (50) dans la direction circonférentielle.

11. Turbocompresseur à soupape de décharge selon l'une quelconque des revendications 7 à 10, **caractérisé en ce que** l'unité électronique (64) comprend un connecteur (78) et un capteur de position (76).

12. Turbocompresseur à soupape de décharge selon l'une quelconque des revendications précédentes, **caractérisé en ce que** le corps de réglage (26) est fixé sur l'arbre de sortie (32).

13. Turbocompresseur à soupape de décharge selon l'une quelconque des revendications 1 à 11, **caractérisé en ce que** le corps de réglage (26) est couplé à un arbre de clapet (30) comprenant un axe de rotation commun avec l'arbre de sortie (32).

14. Turbocompresseur à soupape de décharge selon la revendication 8, **caractérisé en ce que** l'arbre de clapet (30) est couplé à l'arbre de sortie (32) par un accouplement Oldham.
